# EUROPÄISCHE PATENTANMELDUNG

(11) **EP 0 908 653 A1**
(43) Veröffentlichungstag der Anmeldung: **14.04.1999**
(21) Anmeldenummer: 98117912.0
(22) Anmeldetag: 22.09.1998
(51) Int. Cl.: F16K 17/10

(54) **Vorgesteuertes Druckbegrenzungsventil**

(30) Priorität: 07.10.1997 DE 19744337
(71) Anmelder: Mannesmann Rexroth AG, 97816 Lohr am Main (DE)
(72) Erfinder: Krug-Kussius, Karl, 97783 Karsbach (DE)
(74) Vertreter: Winter, Brandl, Fürniss, Hübner, Röss, Kaiser, Polte, Kindermann Partnerschaft

(57) **Zusammenfassung**

Offenbart ist ein vorgesteuertes Druckbegrenzungsventil, dem eine Wegeventilanordnung zugeordnet ist, über die der Druck im Federraum (66) eines Hauptkolbens (70) des Druckbegrenzungsventils zur Rückseite eines Übersetzerkolbens (120) eines Vorsteuerventils (116) führbar ist, so daß das Hauptventilglied zur Dämpfung eines Druckaufbaus am Eingangsanschluß des Druckbegrenzungsventils weit unterhalb des Maximaldruckes aufsteuerbar ist.

## Beschreibung

Die Erfindung betrifft ein vorgesteuertes Druckbegrenzungsventil und ein Verfahren zum Ansteuern eines derartigen Druckbegrenzungsventils.

Vorgesteuerte Druckbegrenzungsventile werden beispielsweise zur Absicherung von hydraulischen Schaltungen für Fahr- und Drehwerksantriebe verwendet, die wahlweise als geschlossener und offener Hydraulikkreislauf ausgeführt sein können.

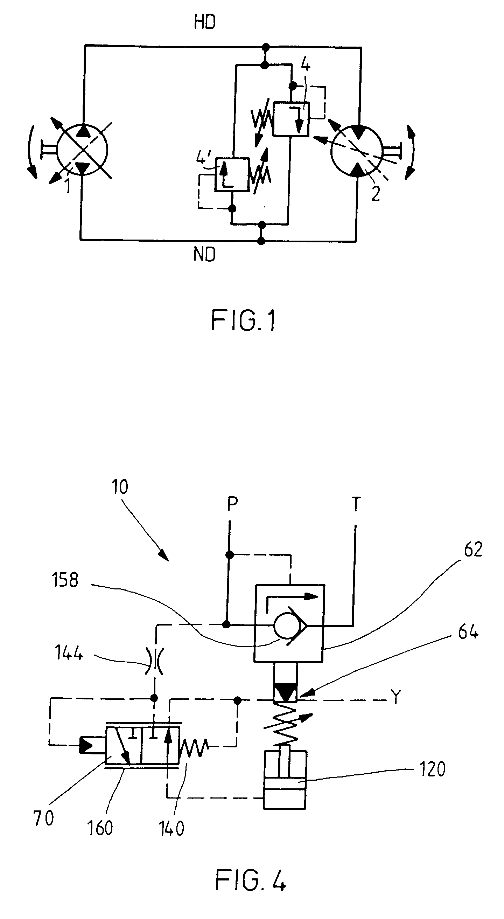

In Fig. 1, auf die bereits jetzt Bezug genommen sei, ist in stark vereinfachter Weise ein bekannter Schaltplan für einen Dreh- und Fahrwerksantrieb dargestellt. Demgemäß hat der geschlossene Kreislauf eine Hydro-Pumpe 1, die als Verstellpumpe ausgeführt ist und über die ein Hydromotor 2 des Fahr- bzw. Drehantriebs angetrieben ist. Die Absicherung des Fahr-/Drehwerkantriebes erfolgt über Druckbegrenzungsventile 4, 4', die bei Überschreiten eines vorgegebenen Systemdrucks in der Hochdruckseite HD zur Niederdruckseite ND hin öffnen. Dabei wird das Hydraulikfluid am Hydromotor 2 vorbei vom Hochdruckzweig in den Niederdruckzweig geführt, so daß Druckspitzen im Hochdruckkreis vermieden werden können. Bei Umkehrung der Förderrichtung der Hydropumpe 1 werden der HD- und der ND-Zweig vertauscht, so daß zur Absicherung dieses Zustandes das parallel geschaltete Druckbegrenzungsventil 4' Wirkung entfaltet.

Das Druckbegrenzungsventil kann mit einer Nachsaugeinrichtung versehen werden, über die ein Ventilkörper des Druckbegrenzungsventils aufsteuerbar ist, um eine Hydraulikfluidströmung vom Niederdruckzweig zum Hochdruckzweig in Figur 1 zu ermöglichen. Diese Nachsaugfunktion erlaubt es im Fall einer Leckage oder bei einem übermäßigen Druckanstieg im Niederdruckzweig, daß das Hydraulikfluid in den Hochdruckzweig nach- bzw. abgeführt wird.

Einer derartigen Schaltung zur Absicherung des Fahr-/Drehwerkantriebes kann noch ein Bremsventil zugeordnet werden, über das die Rückströmung im ND-Zweig beeinflußbar ist.

Vorstehend beschriebene Schaltungen werden beispielsweise bei Baumaschinen, wie Mobilbaggern etc. verwendet, wobei über den Fahrantrieb die Raupen des Baggers angetrieben werden, während der Drehantrieb für die Oberwagendrehung des Baggers zuständig ist.

Beim Anschwenken des Oberwagens oder beim Beschleunigen des Baggers wird der Hydromotor mit einem hohen Hydraulikdruck beaufschlagt, so daß diese Bewegungen vergleichsweise schnell eingeleitet werden und die Aufbauten einer erheblichen Beschleunigung mit entsprechend hohen Massenträgheitskräften ausgesetzt sind. Diese schlagartigen Belastungen können zu einer Beschädigung der Aufbauten oder der Hydraulikkomponenten führen.

Man ist daher bestrebt, Geschwindigkeitsänderungen derart durchzuführen, daß weiche Übergänge zwischen den Fahr-/Drehzuständen hergestellt werden. Dabei wird beim Auftreten eines Hydraulikfluidmengensprunges der momentan arbeitende Verbraucher, beispielsweise das Drehwerk oder das Fahrwerk, gedämpft beschleunigt oder verzögert (Shockless-Funktion).

In der DE 195 24 900 A1 wird vorgeschlagen, für die Absicherung des jeweiligen Hochdruckzweiges vorgesteuerte Druckbegrenzungsventile zu verwenden, die in der Fig. 1 entnehmbaren Weise über Kreuz geschaltet werden. Mit derartigen Druckbegrenzungsventilen ist allerdings eine Dämpfung des Druckaufbaus beim Beschleunigen oder Verzögern nicht möglich.

In der EP 0 564 654 A1 wird ein direkt gesteuertes Druckbegrenzungsventil gezeigt, bei dem zur Beschleunigungsdämpfung einem abgestuften Ventilkegel ein Speicherring zugeordnet ist, der durch den Druck im Federraum des Ventilkegels axial verschiebbar ist. Durch die Axialverschiebung des Speicherringes wird das Volumen des Federraumes praktisch vergrößert, so daß hier ein Druckabfall stattfindet, der ein Öffnen des Hauptkegels gegen die Kraft der Ventilfeder ermöglicht, so daß der Druckaufbau am Druckbegrenzungsventil so lange verzögert wird, bis die Axialverschiebung des Speicherringes und damit der Druckabfall im Federraum abgeschlossen sind. Dieses Öffnen aufgrund der Verschiebung des Speicherringes erfolgt bei einem vergleichsweise niedrigen Druck, der unterhalb des Einstellpunktes des Hauptventils liegt.

Bei diesem direkt gesteuerten Druckbegrenzungsventil wird die Dämpfung im wesentlichen durch die Zuführung des Hydraulikfluids zum Speicherring und durch die Federrate der Ventilfeder bestimmt. Letztere muß jedoch vergleichsweise hoch ausgeführt werden, da der Einstellpunkt derartiger Druckbegrenzungsventile bei mehreren 100 bar, beispielsweise 400 bar liegen kann.

Bei einem Einsatz derartiger Druckbegrenzungsventile in Antriebsschaltungen für Fahr-/Drehwerksantriebe zeigte es sich, daß trotz der Absicherung des Sekundärkreises bei bestimmten Beschleunigungszuständen noch Druckspitzen oder übermäßige Beschleunigungen auftreten können, die im Hinblick auf die Betriebssicherheit des Gerätes nicht akzeptabel sind.

In der am 6. August 1997 eingereichten, nachveröffentlichten Patentanmeldung 197 34 020.2 der Anmelderin ist ein Druckbegrenzungsventil ohne Nachsaugfunktion gezeigt, bei dem dem Federraum des Hauptventilgliedes ein Dämpfungsglied zugeordnet ist, das sich durch die Druckdifferenz zwischen beiden Anschlüssen bewegen läßt, so daß das Hauptventil bei geschlossenem Vorsteuerventil aufsteuerbar ist, um ein schlagartiges Druckansteigen am Verbraucher zu verhindern.

Der Erfindung liegt die Aufgabe zugrunde, ein Druckbegrenzungsventil und ein Verfahren zum Aufsteuern eines Druckbegrenzungsventils zu schaffen, das bei minimalem vorrichtungstechnischen Aufwand ein verbessertes Ansprechverhalten ermöglicht.

Diese Aufgabe wird durch ein vorgesteuertes Druckbegrenzungsventil mit den Merkmalen des Patentanspruchs 1 bzw. ein Verfahren mit den Merkmalen des nebengeordneten Patentanspruchs 2 gelöst.

Durch die Maßnahme, bei Überschreiten eines vorbestimmten Zuschaltdruckes den Federraum des Hauptventilgliedes mit dem von einer Übersetzerkolbenrückseite begrenzten Raum zu verbinden, kann Hydraulikfluid aus dem Federraum zum Übersetzerkolben strömen, so daß der Druck im Federraum abgebaut wird und das Hauptventilglied bei geschlossenem Vorsteuerventil aufsteuerbar ist. Durch dieses Aufsteuern des Hauptventilgliedes kann ein schlagartiger Druckaufbau verhindert werden, so daß auftretende Beschleunigungen des Aufbaus durch ein frühzeitiges Öffnen des Hauptventilgliedes weit unterhalb seines Öffnungspunktes zuverlässig gedämpft werden. Eine Beschädigung der Schaltungskomponenten oder des Aufbaus des betriebenen Mobilgerätes durch übermäßige Beschleunigung ist somit nahezu ausgeschlossen.

Vorrichtungstechnisch wird das erfindungsgemäße Verfahren beispielsweise durch Zuordnen einer Ventileinrichtung zum vorgesteuerten Druckbegrenzungsventil gelöst, über die der Federraum des Hauptventilgliedes mit dem von der Übersetzerkolbenrückseite begrenzten Raum verbindbar ist.

Diese Ventileinrichtung wird vorteilhafterweise als Mehrwegeventil (stetig verstellbar, Schaltventil) ausgeführt, über das die Übersetzerkolbenrückseite entweder mit einem Vorsteuerdruck des Druckbegrenzungsventils oder mit dem Druck im Federraum beaufschlagbar ist.

Der vorrichtungstechnische Aufwand läßt sich weiter minimieren, wenn das Mehrwegeventil einen Ventilkörper hat, der in einer ersten Schaltstellung gegen einen Ventilsitz an einer im Federraum mündenden Axialbohrung des Übersetzerkolbens vorgespannt ist und der in einer zweiten Schaltstellung eine Verbindungsleitung verschließt, über die der Vorsteuerdruck zur Übersetzerkolbenrückseite geführt ist.

Eine in Axialrichtung äußerst kompakte Ausführung erhält man, wenn der Ventilkörper des Vorsteuerventils einen in die Axialbohrung des Übersetzerkolbens dichtend eintauchenden Axialvorsprung hat und dieser von einer Mittelbohrung durchsetzt ist, die einerseits im Federraum des Hauptventilgliedes und andererseits in der Axialbohrung des Übersetzerkolbens mündet, so daß der im Federraum herrschende Druck durch den Vorsteuerventilkörper hindurch zum Mehrwegeventil führbar ist.

In der Axialbohrung ist vorteilhafterweise ein Drosselkörper angeordnet, dessen Querschnitt die Strömung vom Federraum hin zur Übersetzerkolbenrückseite bestimmt.

Der Ventilkörper des Mehrwegeventils kann als Kolben ausgeführt sein, an dem der Drosselkörper einstückig ausgebildet ist oder auch als kugelförmiges Ventilelement, an dem der Drosselkörper und gegebenenfalls ein Federteller zur Vorspannung anliegen.

Bei beiden Varianten wird der Drosselquerschnitt des Drosselkörpers vorteilhafterweise durch am Außenumfang angeordnete Axialkerben ausgebildet.

Einen besonders kompakten und einfach vormontierbaren Ventilaufbau erhält man, wenn der Übersetzerkolben an seiner Rückseite tassenförmig ausgeführt ist und in den entstehenden Ringmantel eine Spindelbuchse eingeschraubt wird, an der die auf den Ventilkörper des Mehrwegeventils wirkende Druckfeder abgestützt ist und der einen der Sitze für diesen Ventilkörper ausbildet. Im Mantel der Spindelbuchse ist eine Mantelbohrung ausgebildet, die in Zusammenwirkung mit einer Längsbohrung des Übersetzerkolbens die Verbindungsleitung zum Anlegen des Vorsteuerdruckes an die Übersetzerkolbenrückseite ermöglicht.

Der im Federraum des Hauptventilgliedes herrschende Druck wird bei abgehobenem Ventilkörper durch den Drosselkörper hindurch über eine Radialbohrung des Ringmantels des Übersetzerkolbens zur Übersetzerkolbenrückseite geführt.

Die Ein- und Abschaltpunkte der Ventilanordnung lassen sich dadurch voreinstellen, daß der Übersetzerkolben in der Ausgangsstellung gegen eine Ventilschulter einer einschraubbaren Verschlußschraube vorgespannt ist und der Übersetzerkolben in einem Gehäuseteil aufgenommen ist, das in das Ventilgehäuse für das Hauptventilglied einschraubbar ist, so daß durch Verändern der Position der Verschlußschraube bzw. des Gehäuseteiles die Vorspannung der zugeordneten Druckfedern veränderbar ist.

Das erfindungsgemäße Druckbegrenzungsventil wird vorteilhafterweise mit einer Nachsaugeinrichtung versehen, die durch einen Mitnehmer für das Hauptventilglied gebildet ist.

Besonders bevorzugt wird es, wenn das Druckbegrenzungsventil als Schiebesitzventil ausgebildet ist.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 einen vereinfachten Schaltplan eines Dreh-/Fahrwerkantriebes mit Sekundärabsicherung nach dem Stand der Technik;
Figuren 2 und 2a ein erstes Ausführungsbeispiel eines erfindungsgemäßen Druckbegrenzungsventils mit Nachsaugeinrichtung;
Figur 3 eine Detailansicht des Druckbegrenzungsventils aus Figur 2;
Figur 4 ein Schaltsymbol des Druckbegrenzungsventils aus Figur 2;
Figur 5 eine Kennlinie des Druckbegrenzungsventils aus Figur 1;
Figur 6 ein zweites Ausführungsbeispiel eines Druckbegrenzungsventils mit Nachsaugeinrichtung und
Figur 7 ein drittes Ausführungsbeispiel eines Druckbegrenzungsventils mit Nachsaugeinrichtung.

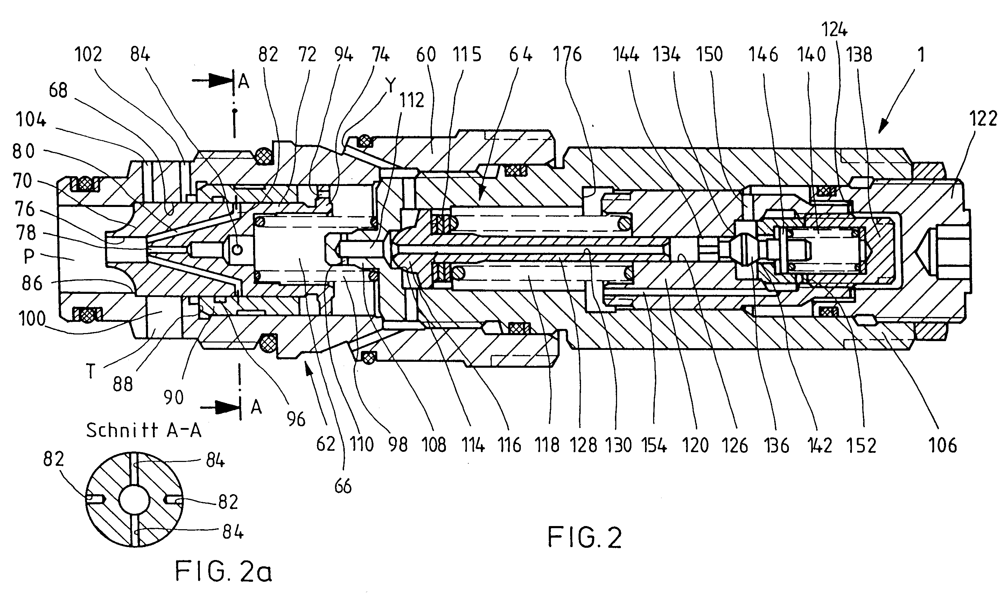

Figuren 2 und 2a zeigen ein erstes Ausführungsbeispiel eines erfindungsgemäßen Druckbegrenzungsventils 1. Dieses hat ein Ventilgehäuse 60, an dem ein Hochdruckanschluß P, ein Niederdruckanschluß T und ein Steueranschluß Y ausgebildet sind.

In dem Ventilgehäuse 60 sind das Hauptventil 62 und das Vorsteuerventil 64 aufgenommen.

Über das Hauptventil 62 erfolgt die Auf- und Zusteuerung der Anschlüsse P und T, während das Vorsteuerventil 64 den Druck im Federraum 66 des Hauptventils 62 bestimmt.

In einer Ventilbohrung 68 des Ventilgehäuses 60 ist der Hauptkolben 70 aufgenommen, dessen vom Anschluß T entfernter Endabschnitt als Ringmantel 72 ausgebildet ist, an dessen Endabschnitt ein radial nach außen vorspringender ringförmiger Anschlagbund 74 vorgesehen ist, der sich vom Ringmantel 72 hin zur Umfangswandung der Ventilbohrung 68 erstreckt.

Der sich an den Ringmantel 72 nach links anschließende zylinderförmige Teil des Hauptkolbens 70 ist von einer Axialbohrung 76 durchsetzt, deren mittlerer Abschnitt zu einer Drosselbohrung 78 mit geringem Querschnitt verengt ist.

In den linken (Ansicht nach Figur 1) erweiterten Endabschnitt der Axialbohrung 76 münden zwei symmetrisch zur Längsachse verlaufende Schrägbohrungen 80, die an ihrem von der Stirnseite des Hauptkolbens 70 entfernten Endabschnitt in Radialbohrungen 82 übergehen, die am Außenumfang des Hauptkolbens 70 münden. Um 90° versetzt zu den beiden Schrägbohrungen 80, d.h. senkrecht zur Zeichenebene, sind zwei diametral gegenüberliegende Radialbohrungen 84 ausgebildet (siehe Figur 2, die einen Schnitt entlang der Linie A-A zeigt), die in dem in Figur 2 oben liegenden, erweiterten Endabschnitt der Axialbohrung 76 münden. Wie weiterhin aus Figur 2 hervorgeht, sind die Radialbohrung 82, 84 in einer Ebene ausgebildet. Die von dem Anschlagbund 74 entfernte Stirnseite des Hauptkolbens 70 liegt an einen Anschlag 86 des Ventilgehäuses 60 an.

Im Axialabstand zum Anschlag 86 ist die Ventilbohrung 68 über eine Radialschulter 88 erweitert, wobei in diesem erweiterten Teil eine Schiebehülse 90 geführt ist, die mit ihrer linken Stirnseite dichtend an der Radialschulter 88 anliegt (Grundstellung in Figur 1). Der Innendurchmesser der Schiebehülse 90 ist so gewählt, daß diese gleitend auf dem Außenumfang des Hauptkolbens 70 geführt ist, so daß letzterer abschnittsweise über die Schiebehülse 90 in der Ventilbohrung 68 geführt ist. Die von der Radialschulter 88 entfernte Stirnfläche 92 der Schiebehülse 90 bildet eine Anschlagfläche für den Anschlagbund 74. Im Anschlagbund 74 des Hauptkolbens 70 ist eine Ausgleichsbohrung 94 vorgesehen, die eine Entlastung des von der Stirnfläche 92 und vom Anschlagbund 74 aufgespannten Raums zwischen Schiebehülse 90 und Hauptkolben 70 ermöglicht.

Im Axialabstand zur linken Stirnseite der Schiebehülse 90 ist in deren Innenwandung ein Ringraum 96 ausgebildet. Der Axialabstand des Ringraums 96 zur Radialschulter des erweiterten Abschnitts 92 ist dabei so gewählt, daß beim Anliegen der Schiebehülse am Anschlagbund 74 der Ringraum 96 in der Ebene der Radialbohrungen 82 und 84 angeordnet ist (Fig. 2a) Auf diese Weise wird dann über den Ringraum 96 eine Verbindung zwischen den Bohrungen 80, 82 und 84 hergestellt.

Mit anderen Worten gesagt, die Schiebehülse 90 wirkt als Schieber eines 2/2-Wegeventils, dessen Anschlüsse einerseits durch die Radialbohrungen 84 und andererseits durch die Radialbohrungen 82 mit den Schrägbohrungen 80 gebildet sind und die über den Ringraum 96 der Schiebehülse 90 miteinander verbindbar sind. In der gezeigten Ausgangsposition ist diese Verbindung jedoch abgesperrt.

Der Hauptkolben 70 ist über eine Regelfeder 98 gegen den Anschlag 86 vorgespannt.

Der Anschluß T ist durch einen Bohrungsstern im Ventilgehäuse 60 gebildet, wobei beim gezeigten Ausführungsbeispiel zwei unterschiedliche Bohrungssysteme verwendet werden. Das erste Bohrungssystem das Anschlusses T besteht aus mehreren gleichmäßig am Umfang verteilten Durchgangsbohrungen 100, wogegen bei der in Figur 1 gezeigten Schnittdarstellung lediglich eine gezeigt ist. Das zweite Bohrungssystem des Anschlusses T besteht aus Bohrungen 102, 104, deren Durchmesser geringer ist, als derjenige der Bohrungen 100. Die Bohrungen 102 sind ebenfalls gleichmäßig am Umfang verteilt, wobei diese gegenüber den Bohrungen 100 um einen vorbestimmten Winkel versetzt sind. Die axial dazu versetzten Bohrungen 104 haben dieselbe Winkelorientierung wie die Bohrungen 102, wobei allerdings lediglich zwei diametral gegenüberliegende Bohrungen 104 im Ventilgehäuse 60 vorgesehen sind. Die Bohrungen 102 münden in den Bereich der Ventilgehäusebohrung 68, an dem die Radialschulter 88 ausgebildet ist, so daß der Druck im Anschluß T über die Bohrungen 102 zur linken Stirnseite der Schiebehülse 90 geführt wird.

Der Axialabstand der Bohrungen 104 zum Anschlag 86 ist derart gewählt, daß diese bei der Stellbewegung des Hauptkolbens 70 aufgesteuert werden, bevor eine wesentliche Aufsteuerung der Durchgangsbohrungen 100 erfolgt.

Der in Figur 1 rechte Endabschnitt der Regelfeder 98 ist an der Stirnseite eines Gehäuseteils 106 abgestützt, das in die Ventilbohrung 68 eingeschraubt ist.

Das Gehäuseteil 106 hat an der in das Ventilgehäuse 60 eintauchenden Stirnseite einen Vorsprung 108, der mittig aus der Stirnseite hervorragt. Dieser nabenförmige Vorsprung 108 ist mit am Umfang verteilten Radialbohrungen 110 versehen, die in einer Bohrung 112 münden. Letztere ist im Abstand zum Vorsprung 108 radial erweitert, so daß ein Vorsteuerventilsitz 114 ausgebildet wird, gegen den ein Vorsteuer-Ventilkörper 116 vorgespannt ist, der in seiner Grundstellung die Axialbohrung 112 verschließt.

Die Vorspannung des Vorsteuerventilkörpers 116 gegen den Ventilsitz 114 erfolgt mittels einer Ventilfeder 118, die einerseits an einer Radialschulter 115 des Vorsteuerventilkörpers 116 angreift und andererseits an einem Übersetzerkolben 120 abgestützt ist, der in einem gegenüber dem Federraum des Vorsteuerventilkörpers 116 radial erweiterten Teil der Bohrung 112 des Gehäuseteils 106 verschiebbar aufgenommen ist.

Der in Figur 2 rechte Teil der Bohrung 112 wird durch eine Verschlußschraube 122 verschlossen, die in das Gehäuseteil 106 eingeschraubt ist. Die Verschlußschraube 122 hat eine Anschlagschulter 124, gegen die der Übersetzerkolben 120 durch die Ventilfeder 118 vorgespannt ist. Die Vorspannung der Ventilfeder 118 läßt sich im Ausgangszustand durch die Position der Verschlußschraube 122 verändern.

Der Übersetzerkolben 120 hat eine Axialbohrung 126, in die ein Axialvorsprung 128 des Vorsteuerventilkörpers 116 eintaucht, der sich von den als Federteller für die Ventilfeder 118 ausgebildeten Radialschulter des Vorsteuerventilkörpers 116 durch den Federraum hindurch in die Axialbohrung 126 hinein erstreckt.

Der Vorsteuerventilkörper 116 hat eine Mittelbohrung 130, die einerseits im Bereich des Ventilsitzes 114 und andererseits in der Axialbohrung 126 mündet, so daß der Federraum für den Hauptkolben 70 über die Bohrung 112 und die Mittelbohrung 130 mit der Axialbohrung 126 des Übersetzerkolbens 120 verbunden ist.

Das Gehäuseteil 106 hat im Bereich des Vorsteuerventilsitzes 114 sich radial erstreckende Mantelbohrungen 129, die mit dem Steueranschluß Y in Verbindung stehen, so daß ein Steuerdruck an den Federraum des Vorsteuerventilkörpers 116 anlegbar ist.

Die Axialbohrung 126 des Übersetzerkolbens 120 ist in dem in Figur 2 rechten Teilabschnitt radial erweitert und bildet einen ersten Ventilsitz 134 für einen Schaltkolben 136, der in der Axialbohrung 126 geführt ist.

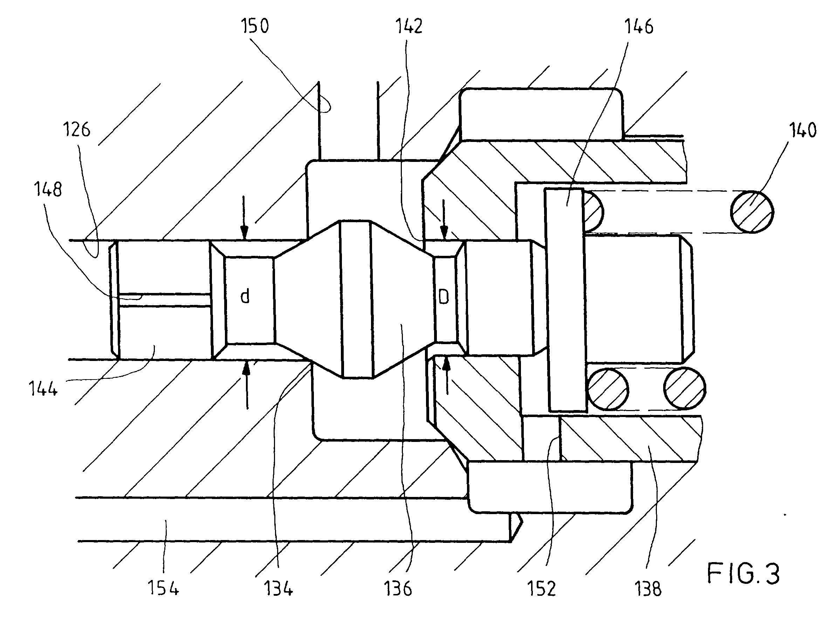

In den in Figur 2 rechts liegenden, radial erweiterten Endabschnitt der Axialbohrung 126 ist des weiteren eine tassenförmig ausgebildete Spindelbuchse 138 eingeschraubt, die den rückwärtigen (rechts in Figur 2) Endabschnitt des Übersetzerkolbens 120 bildet. Am Boden der Spindelbuchse 138 ist eine Druckfeder 140 abgestützt, über die der Schaltkolben 136 gegen den ersten Ventilsitz 134 vorgespannt ist (siehe auch Figur 3). Die Spindelbuchse 138 ist an ihrem zum Schaltkolben 136 benachbarten Endabschnitt mit einer Radialschulter versehen, die einen zweiten Ventilsitz 142 für den als Doppelkegel ausgeführten Schaltkolben 136 ausbildet. Letzterer ist gegen die Spannung der Druckfeder 140 zum zweiten Ventilsitz 142 hin bewegbar.

Der in den Figuren 2 und 3 dargestellte Schaltkolben 136 hat des weiteren einen als Drosselkörper 144 ausgebildeten zylindrischen Abschnitt, der in der Axialbohrung 126 geführt ist. Beim gezeigten Ausführungsbeispiel ist der Drosselkörper 144 einstückig mit dem Doppelkegel-Schaltkolben 136 ausgebildet.

An dem vom Drosselkörper 144 entfernten Endabschnitt des Schaltkolbens 136 ist ein Federteller 146 für die Druckfeder 140 vorgesehen, der ebenfalls einstückig mit dem Schaltkolben 136 ausgebildet ist.

Der Durchmesser d des ersten Ventilsitzes 134 ist geringer als der Durchmesser D des zweiten Ventilsitzes 142, so daß aufgrund der unterschiedlichen Ventilsitzflächen unterschiedliche Drücke erforderlich sind, um den Schaltkolben 136 wechselweise von den Ventilsitzen 134, 142 abzuheben. Durch diese Ausgestaltung des Schaltkolbens 136 mit unterschiedlichen Wirkflächen wird ein Übersetzungsverhältnis i definiert, das den Zuschaltpunkt und den Abschaltpunkt der Ventilanordnung festlegt. Diesbezüglich sei auf die folgenden Ausführungen verwiesen.

Wie des weiteren aus der Detaildarstellung gemäß Figur 3 hervorgeht, ist der Drosselkörper 144 mit Axialkerben 148 versehen, die eine geringe Hydraulikfluidströmung von der Axialbohrung 136 durch die Axialkerben 148 hindurch zum ersten Ventilsitz 134 ermöglichen.

Zwischen dem ersten Ventilsitz 134 und dem zweiten Ventilsitz 142 ist im Ringmantel des Übersetzerkolbens 120 eine Radialbohrung 150 ausgebildet, die in einem radial erweiterten Teil der Bohrung 112 des Gehäuseteiles 106 mündet, so daß der Druck im Bereich des ersten oder zweiten Ventilsitzes 134, 142 durch die Radialbohrung 150 hindurch zur in Figur 2 rechten Stirnseite des Übersetzerkolbens 120 führbar ist.

Die Spindelbuchse 138 ist mit einer oder mehreren Mantelbohrungen 152 versehen, die einerseits im Federraum für die Druckfeder 140 und andererseits in einer Längsbohrung 154 des Übersetzerkolbens 120 münden gemeinsam und eine Verbindungsleitung bilden, über die der im Federraum des Vorsteuerventilkörpers 116 herrschende Steuerdruck zum Federraum für die Druckfeder 140 führbar ist. Dieser Steuerdruck wird bei der Grundstellung des Schaltkolbens 136 durch den geöffneten zweiten Ventilsitz 142 und die Radialbohrung 150 hindurch zur Rückseite des Übersetzerkolbens geführt, so daß der am Steueranschluß Y herrschende Druck den Übersetzerkolben 120 beaufschlagt, so daß die Vorspannung der Ventilfeder 118 des Vorsteuerventilkörpers 116 in Abhängigkeit vom Steuerdruck veränderbar ist.

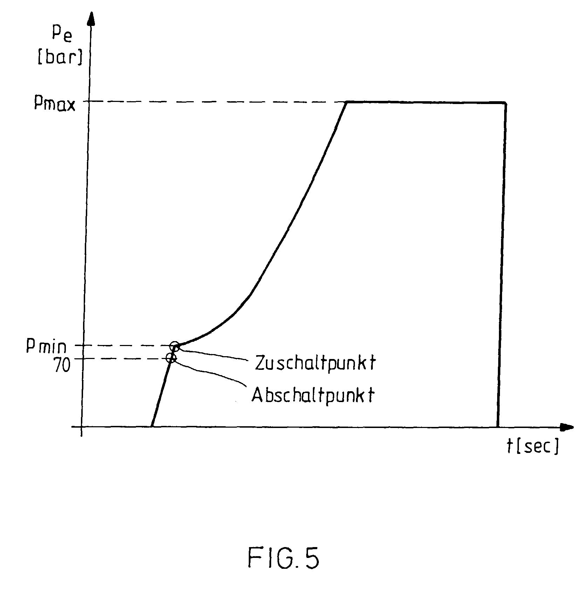

Die Schaltsymbolik des in Figur 2 dargestellten vorgesteuerten Druckbegrenzungsventils mit Nachsaugeinrichtung ist in Figur 4 gezeigt.

Demgemäß hat das Druckbegrenzungsventil 10 ein Hauptventil 62 und ein Vorsteuerventil 64 mit dem in den vorstehend beschriebenen Figuren dargestellten Vorsteuerventilkörper 116, über den eine Verbindung vom ersten Anschluß P zum zweiten Anschluß T aufsteuerbar ist. Eine Durchströmung in Gegenrichtung wird durch die Nachsaugeinrichtung 158 ermöglicht, die beim vorbeschriebenen Ventil durch die Schiebehülse 90 realisiert ist. Der Druck am ersten Anschluß P wird über den Drosselkörper 144 zu einem 3/2-Wegeventil 160 geführt, das beim gezeigten Ausführungsbeispiel durch den Schaltkolben 136 und die beiden Ventilsitze 134, 142 gebildet ist. Der Schaltkolben des Wegeventils 160 wird über die Druckfeder 140 in seine Grundstellung vorgespannt, in der der Steueranschluß Y über das Wegeventil 160 mit der Rückseite des Übersetzerkolbens 120 verbunden ist.

Der Druck im ersten Anschluß P wird über den Drosselkörper 144 und die Axialbohrung 126 zur Stirnseite des Schaltkolbens 136, d.h. zum ersten Ventilsitz 134 geführt, so daß der Schaltkolben 136 bei einem vorbestimmten Zuschaltpunkt gegen die Kraft der Druckfeder 140 in seine zweite Schaltposition bringbar ist, in der der Druck am Eingangsanschuß P über den Drosselkörper 144 und das Wegeventil 160 zur Rückseite des Übersetzerkolbens 120 führbar ist.

Die Druckbegrenzungsfunktion des vorbeschriebenen Druckbegrenzungsventils wird im folgenden beschrieben.

Wird zum Einleiten einer Fahr-/Drehzustandsänderung die Zulaufleitung 6 (Figur 1) mit einem Hydraulikdruck beaufschlagt, so liegt dieser auch am Eingangsanschluß P an. Dieser Druck wird über die Drosselbohrung 78 in den Federraum des Hauptkolbens 70 geführt, der durch die Regelfeder 98 in seine Grundstellung vorgespannt ist. Der Druck im Federraum wird durch die Bohrung 112 im Gehäuseteil 106 und die koaxial dazu angeordnete Mittelbohrung 130 des Vorsteuerventilkörpers 116 zur Axialbohrung 126 des Übersetzerkolbens 120 geführt. Der in der Axialbohrung 126 herrschende Druck wird über den Drosselkörper 144 zum ersten Ventilsitz 134 geleitet, der durch den linken Kegel des Schaltkolbens 136 (Ansicht nach Figur 3) verschlossen ist. In diesem Zustand wird der im Federraum des Vorsteuerventilkörpers 116 herrschende Steuerdruck über die Längsbohrung 154, die Mantelbohrung 152, den Ringspalt im Bereich des vom zweiten Ventilsitz 142 abgehobenen Schaltkolbens 136 sowie durch die Radialbohrung 150 zur Rückseite des Übersetzerkolbens 120 geführt, so daß der am Steueranschluß Y herrschende Steuerdruck den Übersetzerkolben 120 zur Vorspannung der Ventilfeder 118 beaufschlagt.

Die auf den Schaltkolben 136 wirkende Druckfeder 140 ist beispielsweise derart ausgelegt, daß der Schaltkolben 136 bei einem Druck von etwa 70 bar in der Axialbohrung 126 vom ersten Ventilsitz 134 abgehoben und in Anlage gegen den zweiten Ventilsitz 142 gebracht wird. Durch die Bewegung des Schaltkolbens 136 wird die Verbindung vom Steueranschluß Y zur Rückseite des Übersetzerkolbens 120 unterbrochen und der in der Axialbohrung 126 herrschende Druck über den Drosselkörper 144 und die Radialhohrung 150 zur Rückseite des Übersetzerkolbens 120 geführt. D.h. bei Anlage des Schaltkolbens 136 an den zweiten Ventilsitz 142 ist der Federraum des Hauptkolbens 70 mit der Rückseite des Übersetzerkolbens 120 verbunden.

Die Axialkerben 148 des Drosselkörpers 144 erlauben eine geringe Hydraulikfluidströmung vom Federraum des Hauptkolbens 70 bei geschlossenem Vorsteuerventilkörper 116 durch die koaxial hintereinander liegenden Bohrungen 112, 130, 126 zur Rückseite des Übersetzerkolbens, so daß der Druck im Federraum des Hauptkolbens 70 absinkt. Dieser steuert dann den Tankanschluß T auf, so daß zunächst kein weiterer Druckanstieg am Anschluß P erfolgt. Mit ansteigendem Druck an der Rückseite des Übersetzerkolbens 120 wird auch die Hydraulikfluidströmung vom Federraum des Hauptkolbens 70 durch den Drosselkörper 144 hindurch zur Rückseite des Übersetzerkolbens 120 geringer, so daß der Hauptkolben 70 die Verbindung zwischen dem ersten Anschluß P und dem Tankanschuß T allmählich wieder zusteuert und der Druck am ersten Anschluß P und damit im Hochdruckzweig parabolisch ansteigt bis der durch das Vorsteuerventil vorgegebene Maximaldruck pₘₐₓ erreicht wird. Der Vorsteuerventilkörper 116 hebt dann von seinem Ventilsitz 114 ab und der Druck im Federraum des Hauptkolbens 70 wird über den Steueranschluß Y entspannt. Durch den daraus resultierenden Druckabfall im Federraum wird der Hauptkolben 70 gegen die Kraft der Regelfeder 98 in der Darstellung nach Figur 2 nach rechts bewegt, so daß die Verbindung zwischen dem Eingangsanschluß P und dem Ausgangsanschluß T aufgesteuert wird. Der Maximaldruck pₘₐₓ liegt jedoch - wie bereits vorstehend erwähnt - erheblich über dem Zuschaltdruck pₘᵢₙ, bei dem die erstmalige Öffnung des Druckbegrenzungsventils aufgrund der Beaufschlagung der Übersetzerkolbenrückseite erfolgt.

Bei einem Druckabfall kann der Abschaltpunkt durch ein geeignetes Übersetzungsverhältnis, d.h. das Verhältnis der Ventilsitzdurchmesser 134, 142 bestimmt werden. Bei einem übersetzungsverhältnis i = 4,2 : 1, d.h. dann, wenn die Wirkfläche des zweiten Ventilsitzes 142 um das 4,2-fache größer ist als diejenige des ersten Ventilsitzes 134, liegt der Abschaltpunkt bei einem pₘᵢₙ von beispielsweise 70 bar bei etwa 17 bar, d.h. erst bei Absinken des Druckes am zweiten Ventilsitz 142 unter etwa 17 bar wird der Schaltkolben 136 wieder in seine Ausgangsposition zurückbewegt.

Die vorstehend beschriebenen Druckverhältnisse sind in der in Figur 5 dargestellten Kennlinie wiedergegeben. D.h. der Druck am Eingangsanschluß P steigt zunächst linear bis zum Erreichen des Zuschaltpunktes bei etwa 70 bar an. Nach Umschalten des Schaltkolbens 136 steuert der Hauptkolben 70 erstmals die Verbindung von P nach T nahezu vollständig auf, so daß zunächst kein weiterer Druckaufbau erfolgt. Anschließend steuert der Hauptkolben 70 die Verbindung von P nach T allmählich zu, so daß ein parabolischer Druckanstieg bis zum Erreichen des vorbestimmten Maximaldruckes erfolgt. Dieser wird dann durch die übliche Wirkung des Druckbegrenzungsventiles auf beispielsweise 400 bar begrenzt.

Die Nachsaugfunktion des vorbeschriebenen Ventils ist ausführlich in der Offenlegungsschrift DE 195 24 900 A1 der Anmelderin beschrieben, auf die diesbezüglich ausdrücklich Bezug genommen sei, so daß auf eine Beschreibung der Nachsaugfunktion unter Hinweis auf die vorgenannte Druckschrift verzichtet werden kann. In der Nachsaugfunktion, d.h. bei Anliegen der Schiebehülse 90 an den Anschlagbund 74 wird durch die Bohrungen 80, 82 und den Ringraum 96 ein vergrößerter Entlastungsquerschnitt zur Verfügung gestellt, die ein schnelles Abströmen des Hydraulikfulids aus dem Federraum des Hauptkolbens 70 bei der Nachsaugfunktion ermöglichen (Schnellentlastung).

Die zentrale Druckmeldung im Vorsteuerventilkörper 116 über die Mittelbohrung 130 ermöglicht eine konstruktive Umsetzung auf unterschiedliche Nenngrößen.

Eine weitere Besonderheit des vorbeschriebenen Druckbegrenzungsventils liegt darin, daß die Wiederholbarkeit der Dämpfungsfunktion (Shockless-Funktion) in gleicher Richtung (beispielsweise beim Anschieben oder Abbremsen des Drehwerkes) möglich ist, da der Schaltkolben 136 stets wieder in seine Grundposition (Figur 2) zurückbewegt wird. Eine derartige Wiederholbarkeit der Shockless-Funktion ist bei Load-Sensing-Systemen erforderlich.

Der Einstelldruck des Vorsteuerventils läßt sich durch Anlegen eines externen Vorsteuerdruckes variieren, so daß der Maximaldruck pₘₐₓ auch durch Variation des Steuerdruckes am Anschluß Y veränderbar ist. Eine derartige Funktion wird beispielsweise im schweren Gelände benötigt, bei der höhere Fahrdrücke auftreten können.

Das erfindungsgemäße Druckbegrenzungsventil ist im offenen und im geschlossenen Kreislauf einsetzbar.

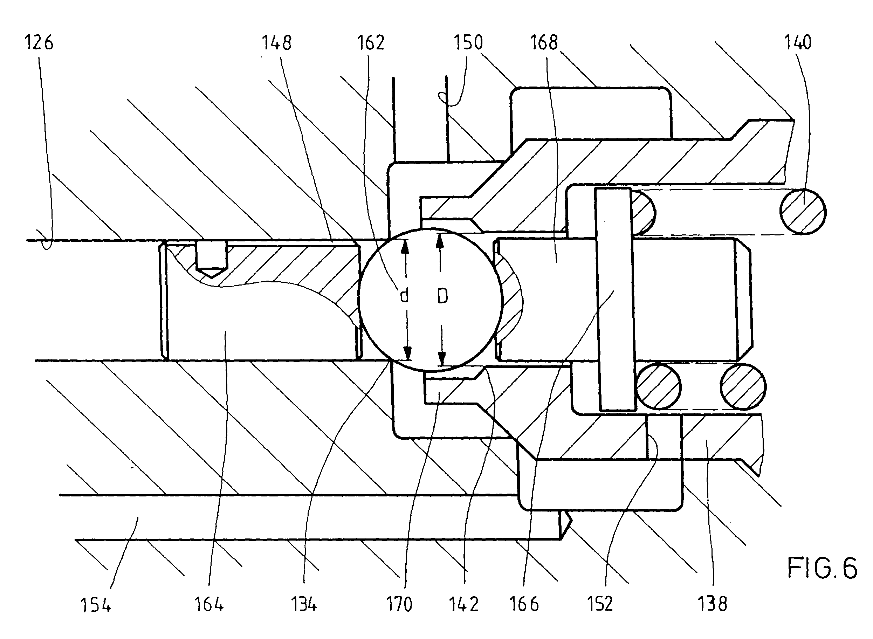

Figur 6 zeigt ein Ausführungsbeispiel des erfindungsgemäßen vorgesteuerten Druckbegrenzungsventils mit Nachsaugeinrichtung, bei dem anstelle des doppelkegeligen Schaltkolbens 120 eine Kugel 162 als Ventilglied verwendet wird. Eine derartige Konstruktion hat den Vorteil, daß die Viskositätsabhängigkeit etwa um den Faktor 6 geringer ist als bei dem vorbeschriebenen Ausführungsbeispiel mit Doppelkegel-Schaltkolben 120.

Bei dem in Figur 6 dargestellten Ausführungsbeispiel wird der Drosselquerschnitt durch einen getrennt von der Kugel 162 ausgebildeten Drosselkörper 164 gebildet. Dieser wird durch den Druck in der Axialbohrung 126 in Anlage an der Kugel 162 gehalten. Die kugelseitige Abstützung der Druckfeder 140 erfolgt über einen Federteller 166, der mit einem Anschlagzapfen 168 die lichte Weite des zweiten Ventilsitzes 142 durchsetzt und am Außenumfang der Kugel 162 anliegt. Zur Führung der Kugel 162 ist die Spindelbuchse 138 mit einer sich an den zweiten Ventilsitz 142 anschließenden Führungshülse 170 versehen, die eine Axialverschiebung der Kugel 162 zwischen dem ersten Ventilsitz 134 und dem zweiten Ventilsitz 142 in Axialrichtung ermöglicht. Selbstverständlich ist bei dem vorbeschriebenen Ausführungsbeispiel das Übersetzungsverhältnis i wiederum durch Wahl der Ventilsitzdurchmesser variierbar, so daß die Zuschalt- und Abschaltpunkte veränderbar sind. Die sonstigen Bauelemente dieses Ausführungsbeispiels entsprechen denjenigen des vorbeschriebenen Ausführungsbeispiels, so daß auf die Beschreibung weiterer Einzelheiten verzichtet werden kann.

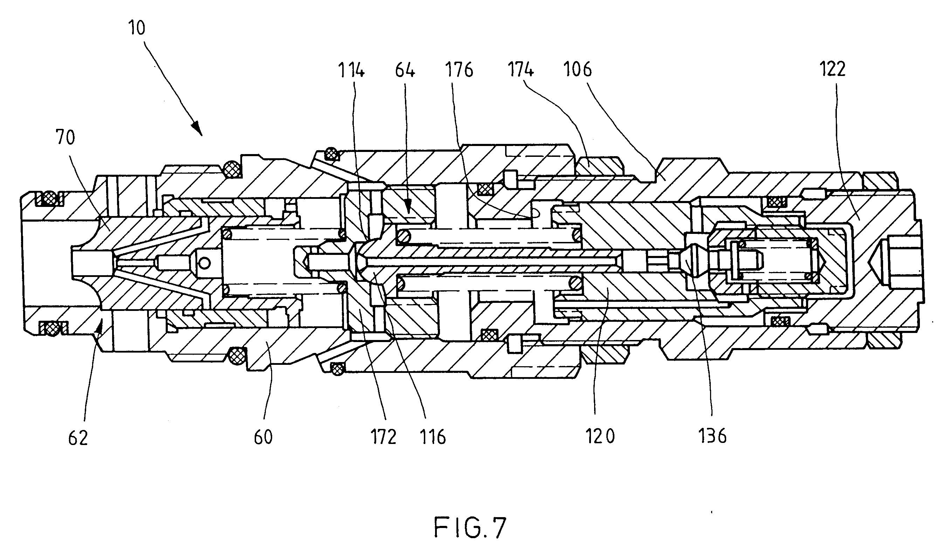

In Figur 7 ist schließlich ein Ausführungsbeispiel dargestellt, bei dem der Vorsteuerventilsitz 114 des Vorsteuerventilkörpers 116 an einem eigenen Ventilsitzteil 172 ausgebildet ist, das in die Ventilbohrung 68 des Ventilgehäuses 60 eingeschraubt ist. In diesem Ventilsitzteil 172 sind auch die sich in Radialrichtung erstrechenden Bohrungen 129 zur Verbindung des Federraumes des Vorsteuerventilkörpers 116 mit dem Steueranschluß Y ausgebildet.

Der Übersetzerkolben 120 und die zugeordneten Bauelemente (Schaltkolben 136, Spindelbuchse 138, etc.) sind wie beim vorbeschriebenen Ausführungsbeispiel im Gehäuseteil 106 aufgenommen, das in den in Figur 7 rechts liegenden Endabschnitt der Ventilbohrung 68 eingeschraubt ist und mit einer Sicherungsmutter 174 gegenüber dem Ventilgehäuse 60 gesichert ist.

Durch die zweiteilige Ausführung des Ventilsitzteiles 172 und des Gehäuseteiles 106 kann die Federvorspannung der Ventilfeder 118 durch die Änderung der Relativposition des zweiten Gehäuseteiles 106 mit Bezug zum Ventilsitzteiles 172 variiert werden, so daß der Maximaldruck einstellbar ist.

Das vorbeschriebene Ausführungsbeispiel mit Gehäuseteil 106 und getrennt davon ausgebildeten Ventilsitzteil 172 ist selbstverständlich mit unterschiedlichen Ventilkörpern (Kugel, Kolben) für das Wegeventil ausführbar.

Bei allen vorbeschriebenen Ausführungsbeispielen ist der Hub des Schaltkolbens 120 hin zum Vorsteuerventilkörper 116 durch eine Anschlagschulter 176 des Gehäuseteiles 106 begrenzt.

Offenbart ist ein vorgesteuertes Druckbegrenzungsventil, dem eine Wegeventilanordnung zugeordnet ist, über die der Druck im Federraum eines Hauptkolbens 70 des Druckbegrenzungsventils zur Rückseite eines Übersetzerkolbens eines Vorsteuerventils führbar ist, so daß das Hauptventilglied zur Dämpfung eines Druckaufbaus am Eingangsanschluß des Druckbegrenzungsventils weit unterhalb des Maximaldruckes aufsteuerbar ist.

## Patentansprüche

1. Vorgesteuertes Druckbegrenzungsventil mit einem Hauptventilglied (70), über das eine Verbindung zwischen einem ersten Anschluß (P) und einem zweiten Anschluß (T) aufsteuerbar ist und das eine Drosselbohrung (78) hat, über die der erste Anschluß (P) mit einem Federraum des Hauptventilgliedes (70) verbunden ist, wobei ein Vorsteuerventil (64) zwischen dem Federraum und einem Steueranschluß (Y) angeordnet ist, dessen Vorsteuerventilkörper (116) mittels einer Ventilfeder (118) gegen einen Ventilsitz (114) vorgespannt ist, deren eines Ende an einem rückseitig mit einem Steuerdruck beaufschlagbaren Übersetzerkolben (120) abgestützt ist, gekennzeichnet durch eine Ventileinrichtung (160), über die die Übersetzerkolbenrückseite mit dem Druck im Federraum des Hauptventilgliedes (70) beaufschlagbar ist.

2. Verfahren zum Ansteuern eines Druckbegrenzungsventils mit einem Hauptventilglied (70), über das eine Verbindung zwischen einem ersten Anschluß (P) und einem zweiten Anschluß (T) aufsteuerbar ist und das eine Drosselbohrung (78) hat, über die der erste Anschluß (P) mit einem Federraum des Hauptventilglieds (70) verbunden ist, wobei ein Vorsteuerventil (64) zwischen dem Federraum und einem Steueranschluß (Y) angeordnet ist, dessen Vorsteuerventilkörper (116) mittels einer Ventilfeder (118) gegen einen Ventilsitz (114) vorgespannt ist, deren eines Ende an einem rückseitig mit einem Steuerdruck beaufschlagbaren Übersetzerkolben (120) abgestützt ist, dadurch gekennzeichnet, daß beim Ansteigen des Druckes im Federraum des Hauptventilgliedes (70) über einen vorbestimmten Einschaltdruck eine Verbindung zwischen dem Federraum des Hauptventilgliedes (70) und dem von der Übersetzerkolbenrückseite begrenzten Raum aufgesteuert wird.

3. Vorgesteuertes Druckbegrenzungsventil nach Patentanspruch 1, dadurch gekennzeichnet, daß die Ventileinrichtung ein Mehrwegeventil (160) ist, über das die Übersetzerkolbenrückseite in einer ersten Schalstellung mit einem Vorsteuerdruck und in einer zweiten Schaltstellung mit dem Druck im Federraum beaufschlagbar ist.

4. Vorgesteuertes Druckbegrenzungsventil nach Patentanspruch 3, dadurch gekennzeichnet, daß das Mehrwegeventil (160) einen Ventilkörper (136, 162) hat, der in einer ersten Schaltstellung gegen einen ersten Ventilsitz (134) an einer mit dem Federraum verbundenen Axialbohrung (126) des Übersetzerkolbens (120) vorgespannt ist, und der in einer zweiten Schaltstellung eine Verbindungsleitung verschließt, die sich zwischen dem von der Kolbenrückseite begrenzten Raum und dem Steueranschluß (Y) erstreckt.

5. Vorgesteuertes Druckbegrenzungsventil nach Patentanspruch 4, dadurch gekennzeichnet, daß der Vorsteuerventilkörper (116) einen in die Axialbohrung (126) des Übersetzerkolbens (120) eintauchenden Axialvorsprung (128) hat und von einer Mittelbohrung (130) durchsetzt ist, die einerseits im Federraum und andererseits in der Axialbohrung (126) mündet.

6. Vorgesteuertes Druckbegrenzungsventil nach Patentanspruch 5, dadurch gekennzeichnet, daß in der Axialbohrung (126) ein Drosselkörper (144) angeordnet ist.

7. Vorgesteuertes Druckbegrenzungsventil nach Patentanspruch 6, dadurch gekennzeichnet, daß der Ventilkörper als Doppelkegel-Kolben (136) ausgeführt und einstückig mit dem Drosselkörper (144) ausgebildet ist.

8. Vorgesteuertes Druckbegrenzungsventil nach Patentanspruch 6, dadurch gekennzeichnet, daß der Ventilkörper eine Kugel (162) und der Drosselkörper (144) ein in Anlage an die Kugel bringbarer Körper ist.

9. Vorgesteuertes Druckbegrenzungsventil nach Patentanspruch 7 oder 8, dadurch gekennzeichnet, daß der Drosselquerschnitt des Drosselkörpers (144) als zumindest eine Axialkerbe (148) ausgebildet ist.

10. Vorgesteuertes Druckbegrenzungsventil nach einem der Patentansprüche 4 bis 9, dadurch gekennzeichnet, daß der Übersetzerkolben (120) an seiner Rückseite tassenförmig ausgebildet ist, so daß die Axialbohrung (126) im Boden des tassenförmigen Abschnittes mündet und daß in dem Ringmantel des tassenförmigen Abschnittes eine Spindelbuchse (138) befestigt ist, an der eine Druckfeder (140) für den Ventilkörper (136, 162) abgestützt ist und an der der zweite Ventilsitz (142) für den Ventilkörper (136, 142) ausgebildet ist, wobei die Spindelbuchse (138) eine Mantelbohrung (152) hat, die im Zusammenwirkung mit einer Längsbohrung (154) des Übersetzerkolbens (120) die Verbindungsleitung bildet.

11. Vorgesteuertes Druckbegrenzungsventil nach Patentanspruch 10, dadurch gekennzeichnet, daß zwischen dem ersten und zweiten Ventilsitz (134, 142) eine Radialbohrung (150) des Ringmantels mündet.

12. Vorgesteuertes Druckbegrenzungsventil nach einem der vorhergehenden Patentansprüche, dadurch gekennzeichnet, daß der Übersetzerkolben (120) gegen eine Radialschulter (124) einer Verschlußschraube (138) vorgespannt ist.

13. Vorgesteuertes Druckbegrenzungsventil nach einem der vorhergehenden Patentansprüche, dadurch gekennzeichnet, daß der Übersetzerkolben (120) in einem Gehäuseteil (106) aufgenommen ist, das axial verschiebbar gegenüber dem Ventilsitz (114) des Vorsteuerventilkörpers (116) ist.

14. Vorgesteuertes Druckbegrenzungsventil nach einem der vorhergehenden Patentansprüche, gekennzeichnet durch einen durch den Druck im zweiten Anschluß (T) betätigbaren Mitnehmer (90) für das Hauptventilglied (70), über den die Verbindung vom zweiten Anschuß (T) zum ersten Anschluß (P) zum Nachsaugen von Hydraulikfluid aufsteuerbar ist.

15. Vorgesteuertes Druckbegrenzungsventil nach einem der vorhergehenden Patentansprüche, dadurch gekennzeichnet, daß das Hauptventilglied als Ventilschieber (70) ausgeführt ist.
